# EUROPÄISCHE PATENTANMELDUNG

(11) **EP 1 897 684 A1**
(43) Veröffentlichungstag der Anmeldung: **12.03.2008**
(21) Anmeldenummer: 07114345.7
(22) Anmeldetag: 14.08.2007
(51) Int. Cl.: B32B 27/08, B65D 65/40, B65D 77/20

(54) **Verbundfolie**

(30) Priorität: 08.09.2006 DE 102006042831
(71) Anmelder: Hydro Aluminium Deutschland GmbH, 51149 Köln (DE)
(72) Erfinder: Schubert, Günter, 53359, Rheinbach (DE)
(74) Vertreter: Cohausz & Florack

(57) **Zusammenfassung**

Die Erfindung betrifft eine Verbundfolie mit einer Substratschicht (1), einer Haftvermittlerschicht (2) und einer Siegelschicht (4). Weiter betrifft die Erfindung ein Verfahren zur Herstellung einer entsprechenden Verbundfolie sowie deren vorteilhafte Verwendung.

Die Aufgabe, eine Verbundfolie zur Verfügung zu stellen, welche beim Heißsiegeln der Verbundfolie eine hohe Temperatur- und Formbeständigkeit aufweist und gleichzeitig gute Extrusionseigenschaften aufweist wird dadurch gelöst, dass mindestens eine der genannten Schichten der Verbundfolie, insbesondere die Haftvermittlerschicht (2), ein sich während der Herstellung veränderndes und/oder nach der Herstellung der Verbundfolie veränderbares Erweichungs-, Fließ- und/oder Erstarrungsverhalten aufweist.

## Beschreibung

Die Erfindung betrifft eine Verbundfolie mit einer Substratschicht, einer Haftvermittlerschicht und einer Siegelschicht. Weiter betrifft die Erfindung ein Verfahren zur Herstellung einer entsprechenden Verbundfolie sowie deren vorteilhafte Verwendung.

Verbundfolien haben ein sehr breites Anwendungsgebiet. Beispielsweise werden Verbundfolien für Verpackungen als Abdeckbänder für Kunststoffbehälter, z.B. für die Verpackung von Molkereiprodukten, eingesetzt. Diese Verbundfolien aber auch solche, die als technische Verbunde oder für die Verpackung von technischen oder pharmazeutischen Produkten eingesetzt werden, weisen überwiegend eine Substratschicht, eine Barriereschicht und eine Siegelschicht auf, wobei zur besseren Haftung zwischen der Substratschicht und der Barriereschicht eine Haftvermittlerschicht vorgesehen ist. Die Substratschicht besteht beispielsweise aus einer Aluminium-, Papier-, Karton- oder einer Polyesterschicht. Für die Barriereschicht, welche sowohl eine Barrierefunktion, z.B. gegenüber den Füllgutkomponenten in dem Behälter, als auch eine mechanisch tragende Funktion übernehmen kann, werden üblicherweise Polymere mit einer Barrierewirkung, wie beispielsweise Polyamid, Polyester oder Polypropylen, eingesetzt. Die zwischen der Substratschicht und der Barriereschicht angeordnete Haftvermittlerschicht besteht zumeist aus amorphen oder gering teilkristallinen Thermoplasten, deren Fließeigenschaften an die Verarbeitung durch Extrusion optimiert sind, was sich in einer guten Schmelzeausziehfähigkeit mit einer geringen Dehnverfestigung niederschlägt. Somit weisen die Polymere der Haftvermittlerschicht gegenüber den Polymeren der Barriereschicht eine niedrigere Erweichungs- bzw. Schmelztemperatur auf.

Beim Heißsiegeln der Verbundfolie, beispielsweise um einen Füllgutbehälter mit dieser Verbundfolie zu verschließen, erweicht bei der Erwärmung der Verbundfolie zunächst die Haftvermittlerschicht und anschließend die Siegelschicht, da diese beiden Schichten jeweils den niedrigsten Erweichungs- bzw. Schmelzpunkte des Verbundfolienverbundes aufweisen. Die Barriereschicht, welche einen deutlich höheren Erweichungs- bzw. Schmelzpunkt als die Haftvermittlerschicht und die Siegelschicht aufweist, erweicht jedoch durch die beim Heißsiegeln zugeführte Wärme nicht. Auf Grund dessen, dass beim Siegeln während der Aufbringung des erforderlichen Siegeldruckes sowohl die Substratschicht als auch die Barriereschicht im Gegensatz zu der dazwischenliegenden Haftvermittlerschicht im festen Zustand vorliegen, wird die erweichte Haftvermittlerschicht zumindest teilweise aus der Siegelnaht heraus- bzw. weggequetscht. Dies führt einerseits zu unerwünschten Faltenbildungen und Rissbildungen in der Barriereschicht, wodurch die Wirkung der Barriereschicht negativ beeinflusst wird. Zum anderen wird dadurch die Einstellung des optimalen Schälwiderstandes, d.h. die Einstellung des optimalen Ablöseverhaltens bzw. Öffnungswiderstandes beispielsweise der auf einen Behälter aufgesiegelten Verbundfolie, zwischen der Verbundfolie und dem mit der Verbundfolie zu verschließenden Behälters erheblich erschwert.

Insbesondere bei coextrudierten bzw. bei sehr dünn coextrudierten Schichten treten die oben genannten Probleme des Wegquetschens der Haftvermittlerschicht aus der Siegelnaht und der sehr schwierigen Steuerung der Einstellung des optimalen Schälwiderstandes auf, wodurch die Herstellung einer solchen Verbundfolie mit Hilfe der Coextrusion bisher sehr problematisch ist.

Um die Wärmeformbeständigkeit von Polymeren zu erhöhen, ist es aus dem Stand der Technik bekannt, Füllstoffe als Additive einzusetzen, wodurch sich aber beispielsweise die Barrierewirkung der Kunststoffe meist verschlechtert. Zudem ist die Zugabe von Füllstoffen bei Haftvermittlern nicht üblich.

Ausgehend von dem erläuterten Stand der Technik liegt der Erfindung die Aufgabe zu Grunde, eine Verbundfolie zur Verfügung zu stellen, welche beim Heißsiegeln eine hohe Temperatur- und Formbeständigkeit aufweist und gleichzeitig gute Extrusionseigenschaften während der Herstellung der Folie gewährleistet. Darüber hinaus liegt der vorliegenden Erfindung die Aufgabe zu Grunde, ein Verfahren zur Herstellung einer erfindungsgemäßen Verbundfolie sowie eine vorteilhafte Verwendung der Verbundfolie vorzuschlagen.

Gemäß einer ersten Lehre der Erfindung ist die zuvor hergeleitete und aufgezeigte Aufgabe dadurch gelöst, dass mindestens eine der genannten Schichten der Verbundfolie, insbesondere die Haftvermittlerschicht, ein sich während der Herstellung veränderndes und/oder nach der Herstellung der Verbundfolie veränderbare Erweichungs-, Fließ- und/oder Erstarrungsverhalten aufweist.

Während das Erweichungsverhalten einer Schicht die Verringerung ihrer Festigkeitseigenschaften beispielsweise bei steigender Temperatur beschreibt, steht das Erstarrungsverhalten für den umgekehrten Prozess. Das Fließverhalten einer Schicht bestimmen im Wesentlichen die Viskosität und die Elastizität. Das Erweichungs-, Fließ- und/oder Erstarrungsverhalten wird vorzugsweise in der Weise verändert, dass der Erweichungs- und/oder Erstarrungstemperaturbereich einer der genannten Schichten der Verbundfolie, insbesondere der Haftvermittlerschicht, zu höheren Temperaturen hin verschoben wird bzw. die Fließfähigkeit der Schicht bei einer gegebener Temperatur verringert wird, wodurch gleichzeitig eine hohe Steifigkeit, Festigkeit und Wärmeformbeständigkeit sowie eine gute Füllgutbeständigkeit dieser Schicht erzielt wird. Insbesondere bei der Haftvermittlerschicht führt dies dazu, dass beim Heißsiegeln der Verbundfolie der Haftvermittler unter Einfluss der beim Heißsiegeln erforderlichen Wärme kaum erweicht und somit die Widerstandsfähigkeit des Haftvermittlers gegen das Herausquetschen des Haftvermittlers aus der Siegelnaht beim Aufbringen des Siegeldruckes erheblich erhöht wird. Dadurch bleibt die Struktur der Verbundfolie auch während des Heißsiegelns erhalten, insbesondere bleibt die Schichtdicke und Schichtdickenhomogenität des Haftvermittlers erhalten. Dies führt wiederum zu besser kontrollierbaren Schäl- bzw. Öffnungswiderständen, welche gezielt einstellbar sind. Zudem werden Kohäsionsbrüche in der Haftvermittlerschicht, welche wiederum zu Brüchen in dem Folienverbund und zu Fädchenbildungen beim Entfernen der aufgesiegelten Verbundfolie von dem Behälter führen, verhindert.

Vorzugsweise weist die erfindungsgemäße Verbundfolie eine Barriereschicht auf. Die Barriereschicht kann einerseits durch die Substrat-, Haftvermittler und/oder Siegelschicht gebildet werden, so dass der Schichtaufbau der Verbundfolie vereinfacht wird. Andererseits können mit einer zusätzlichen Barriereschicht spezifische Barriereeigenschaften der Verbundfolie auf einfache Weise eingestellt werden.

Dadurch, dass der Vernetzungsgrad der Haftvermittlerschicht während und/oder nach der Herstellung der Verbundfolie einstellbar ist, wird erreicht, dass das Erweichungs-, Fließ- und Erstarrungsverhalten bei der Herstellung der Schicht, vorzugsweise durch Extrusionsbeschichtung, von dem Erweichungs-, Fließ- und Erstarrungsverhalten nach der Herstellung der Verbundfolie beim Versiegeln bzw. Verschweißen der Verbundfolie mit beispielsweise einem Füllgutbehälter entkoppelt ist.

Eine vorteilhafte Ausführungsform der Erfindung besteht darin, dass eine einen während und/oder nach der Herstellung der Verbundfolie einstellbaren Vernetzungsgrad aufweisende, nicht-polypropylenbasierende Haftvermittlerschicht vorgesehen ist. Bisher wurden aufgrund des relativ hohen Schmelzpunktes und der guten Hafteigenschaften polypropylenbasierende Schichten, beispielsweise für sterilisierbare Verpackungen, als Haftvermittlerschichten verwendet, so dass die Stoffauswahl für die Haftvermittlerschichten relativ beschränkt war. Polypropylenbasierende Schichten sind aber problematisch im Hinblick auf deren Extrudierbarkeit. Der Grad der Vernetzung der Haftvermittlerschicht ist in Abhängigkeit von dem Anwendungsfall einstellbar, so dass das Erweichungs-, Fließ und/oder Erstarrungsverhalten an den Herstellprozess gezielt angepasst werden kann. Dies ermöglicht auch nicht-polypropylenbasierende Haftvermittlerschichten, welche beispielsweise bessere Extrusionseigenschaften aufweisen, einzusetzen. Durch die Änderung des Vernetzungsgrades der Haftvermittlerschicht nach der Herstellung der Verbundfolie kann die thermische und mechanische Beständigkeit der Haftvermittlerschicht, insbesondere der Temperatur- und Füllgutbeständigkeit des Haftvermittlers, wesentlich erhöht werden, so dass die Haftvermittlerschicht beispielsweise auch pasteurisier- und/oder sterilisationsbeständig eingestellt werden kann, ohne dass dessen Kristallit-Schmelzpunkt über der Pasteurisier- oder Sterilisiertemperatur liegen muss, was beispielsweise beim Einsatz der erfindungsgemäßen Verbundfolie als siegelfähiges Abdeckband bei der Verpackung von Molkereiprodukten, Pasteten und/oder Tiernahrung vorteilhaft ist.

Ferner wird durch die Erhöhung des Vernetzungsgrades des Haftvermittlers die Permeabilität des Haftvermittlers verringert, was wiederum zu einer erhöhten chemischen und thermischen Beständigkeit der Haftvermittlerschicht und damit der gesamten erfindungsgemäßen Verbundfolie führt, wobei die Verbundfolie trotzdem als flexible Verpackung eingesetzt werden kann.

Die Veränderung des Erweichungs-, Fließ- und/oder Erstarrungsverhalten, so dass der Erweichungs- und/oder Erstarrungstemperaturbereich einer der genannten Schichten der Verbundfolie, insbesondere der Haftvermittlerschicht, zu höheren Temperaturen hin verschoben wird bzw. die Fließfähigkeit der Schicht bei einer gegebener Temperatur verringert wird, durch die Erhöhung des Vernetzungsgrades des Haftvermittlers stellt eine kostengünstige Möglichkeit dar, um die thermischen, mechanischen und chemischen Eigenschaften des Haftvermittlers in der Verbundfolie deutlich zu verbessern.

Eine weitere vorteilhafte Ausgestaltung der Erfindung besteht darin, dass eine einen während und/oder nach der Herstellung der Verbundfolie einstellbaren Vernetzungsgrad aufweisende, polyethylen- oder polyamidbasierende Haftvermittlerschicht vorgesehen ist. Bei der Verwendung einer polyethylenbasierenden Haftvermittlerschicht, deren Polyethylen-Makromoleküle sich dreidimensional vernetzen lassen, wird eine hohe Temperaturbeständigkeit der Haftvermittlerschicht und ein sehr hoher Widerstand gegen schnelle Rissfortpflanzung in der Haftvermittlerschicht erzielt. Ferner ist die Deformierung unter Last, das sog. Kriechen, durch die Vernetzung erheblich geringer als bei unvernetztem Polyethylen. Die Verwendung von Polyethylen ist kostengünstig und zudem einfach in der Verarbeitung. Die Vernetzungsmittel können direkt bei der Extrusion (Direktextrusion oder reaktive Extrusion) zu dem Polyethylen dazugegeben werden, wodurch die Vernetzung gezielt gestartet und gesteuert werden kann, so dass die Höhe des Vernetzungsgrades leicht an den Anwendungsfall anpassbar ist. Als Vernetzungsverfahren wird vorzugsweise die Silanvernetzung eingesetzt, wobei aber auch andere Vernetzungsverfahren, wie beispielsweise die Strahlenvernetzung, die Peroxidvernetzung, oder die Azovernetzung angewendet werden können.

Ist eine polyamidbasierende Haftvermittlerschicht vorgesehen, ist eine einfachere Vernetzung möglich als z. B. bei der Verwendung von Polyethylen als Haftvermittlerschicht, da der im Polyamid enthaltene Wassergehalt für die bei der Vernetzungsreaktion, vorzugsweise einer Silanvernetzung, notwendige Feuchtigkeit ausreicht, so dass bei der Vernetzung von Polyamid keine zusätzliche Feuchtigkeit, wie es für die Vernetzungsreaktion von Polyethylen notwendig ist, zugeführt werden muss.

Außer Polyethylen und Polyamid können auch andere Thermoplaste, deren Erweichungs-, Fließ- und/oder Erstarrungsverhalten durch den Vernetzungsgrad verändert werden kann, als Haftvermittler eingesetzt werden.

In einer weiteren vorteilhaften Ausführungsform der Erfindung ist die Haftvermittlerschicht zusammen mit der Barriereschicht und/oder der Siegelschicht gemeinsam coextrudiert. Durch die Verwendung der Coextrusion bei der Herstellung der erfindungsgemäßen Verbundfolie verringert sich die Anzahl der Herstellungsschritte, was wiederum zu einer vorteilhaften Zeitersparnis und Kostenersparnis bei der Herstellung der erfindungsgemäßen Verbundfolie führt.

Gemäß einer zweiten Lehre der Erfindung betrifft die Erfindung ein Verfahren zur Herstellung einer Verbundfolie mit einer Substratschicht, einer Haftvermittlerschicht und einer Siegelschicht.

Die oben hergeleitete und aufgezeigte Aufgabe wird gemäß der zweiten Lehre der Erfindung dadurch gelöst, dass während und/oder nach der Herstellung der Verbundfolie das Erweichungs-, Fließ- und/oder Erstarrungsverhalten mindestens einer der Schichten, insbesondere der Haftvermittlerschicht, eingestellt wird.

Zu den Vorteilen des Verfahrens gemäß der zweiten Lehre der Erfindung kann auf die oben aufgeführten Vorteile der Verbundfolie gemäß der ersten Lehre der Erfindung verwiesen werden.

Die Einstellung des Erweichungs-, Fließ- und/oder Erstarrungsverhaltens der jeweiligen Schicht, insbesondere der Haftvermittlerschicht, erfolgt vorzugsweise in der Art, dass während und/oder nach der Herstellung der Verbundfolie der Vernetzungsgrad der betreffenden Schicht eingestellt wird. Üblichweise wird der Vernetzungsgrad erhöht. Durch die Erhöhung des Vernetzungsgrades wird gleichzeitig eine Erhöhung der Steifigkeit, Festigkeit und Wärmeformbeständigkeit sowie der Füllgutbeständigkeit der jeweiligen Schicht erreicht. Durch die hohe Wärmeformbeständigkeit, wodurch die Erweichungs- bzw. Schmelztemperatur erhöht wird, wird insbesondere bei der Haftvermittlerschicht verhindert, dass durch die beim Heißsiegeln der Verbundfolie zugeführte Wärme die Haftvermittlerschicht aufschmilzt und anschließend durch den beim Heißsiegeln aufgebrachten Druck aus der Siegelnaht weggequetscht wird. Dadurch, dass sich zudem durch den erhöhten Vernetzungsgrad die Schichtdicke und Schichtdickenhomogenität beim Heißsiegeln kaum ändert, werden konstante und reproduzierbare Schäl- bzw. Öffnungswiderstände erzielt und Kohäsionsbrüche in der Haftvermittlerschicht werden verhindert. Beispielsweise kann der Erweichungs- und/oder Erstarrungstemperaturbereich zu höheren Temperaturen hin verschoben werden bzw. die Fließfähigkeit der Schicht bei einer gegebener Temperatur verringert werden, so dass eine Entkopplung der Verarbeitungseigenschaften bei der Extrusion der Haftvermittlerschicht von dem Erweichungs-, Fließ- und/oder Erstarrungsverhalten beim Siegeln erfolgt. Hierdurch wird die Stoffauswahl für die Haftvermittlerschicht deutlich vergrößert. Bei der Veränderung des Vernetzungsgrades werden die einzelnen Polymerketten der zu vernetzenden Schicht durch geeignete Reaktionen miteinander zu Netzwerken vernetzt, wodurch die Erweichungs-, Fließ- und/oder Erstarrungstemperatur aufgrund des steigenden Molekulargewichts erhöht und die mechanischen Eigenschaften verbessert werden. Die Vernetzungsreaktion erfolgt meist durch Zugabe von Vernetzungsstartern und durch Zufuhr von Feuchtigkeit, Wärme, Licht oder anderer Strahlung. Die Komponenten für die Vernetzung können einerseits direkt im Material für die Extrusion bereitgestellt oder über Masterbatches zugeführt werden. Der Grad der Vernetzung kann dabei beliebig eingestellt werden. Vorzugsweise wird erst nach der Herstellung der Verbundfolie der Vernetzungsgrad der Haftvermittlerschicht erhöht.

Gemäß einer weiteren vorteilhaften Ausführungsform des erfindungsgemäßen Verfahrens wird als Haftvermittlerschicht eine einen während und/oder nach der Herstellung der Verbundfolie einstellbaren Vernetzungsgrad aufweisende, nicht-polypropylenbasierende Schicht verwendet wird. Wie bereits zuvor erwähnt, weisen polypropylenbasierende Schichten verbesserungswürdige Extrusionseigenschaften auf. Durch die erfindungsgemäß verwendete nicht-polypropylenbasierende Haftvermittlerschicht können die Extrusionseigenschaften der Haftvermittlerschicht deutlich verbessert werden.

Vorzugsweise wird als Haftvermittlerschicht eine einen während und/oder nach der Herstellung der Verbundfolie einstellbaren Vernetzungsgrad aufweisende, polyethylen- oder polyamidbasierende Schicht verwendet. Polyethylenbasierende oder auch polyamidbasierende Haftvermittlerschichten weise zum einen gute bis sehr gute Extrusionseigenschaften auf. Zum anderen stehen eine Reihe von Vernetzungsverfahren zur Verfügung, um den Vernetzungsgrad nachträglich zu erhöhen. Die für die Vernetzungsreaktion notwendigen Vernetzungsmittel können bei der Extrusion der Haftvermittlerschicht direkt zugegeben werden, so dass die Vernetzung gezielt gesteuert werden kann und der Vernetzungsgrad während der Herstellung eingestellt werden kann. Bei der Extrusion werden vorzugsweise Doppelschnecken oder Doppelbarriereschnecken eingesetzt, durch welche eine gute Homogenisierung der Komponenten ohne starke Scherbeanspruchung des Materials erzielt wird. In Abhängigkeit von dem Vernetzungsverfahren sind keine speziellen Dosieranlagen für die für die Vernetzungsreaktion zuzugebenden Additive erforderlich.

Als Vernetzungsverfahren wird bei polyethylenbasierenden Haftvermittlerschichten vorzugsweise die Silanvernetzung (PE-Xb) eingesetzt, wobei aber auch andere Vernetzungsverfahren wie beispielsweise die Peroxidvernetzung (PE-Xa), die Strahlenvernetzung (PE-Xc) oder die Azovernetzung (PE-Xd) angewendet werden können.

Eine polyamidbasierende Haftvermittlerschicht, welche einen während und/oder nach der Herstellung einstellbaren Vernetzungsgrad aufweist, als Haftvermittler, ermöglicht, zusätzlich die mechanischen Eigenschaften der Verbundfolie und deren chemische Beständigkeit zu verbessern. Polyamid zeichnet sich durch eine hohe Festigkeit, Steifigkeit und eine gute chemische Beständigkeit aus. Bei der Verwendung einer polyamidbasierenden Schicht als Haftvermittlerschicht ist zudem eine einfache Vernetzung möglich, da der im Polyamid enthaltene Wassergehalt für die bei der Vernetzungsreaktion, vorzugsweise einer Silanvernetzung, notwendige Feuchtigkeit zum Start der Vernetzungsreaktion ausreicht, so dass bei der Vernetzung von Polyamid keine zusätzliche Feuchtigkeit, wie bei der Vernetzung von Polyethylen, zugeführt werden muss.

Eine weitere vorteilhafte Ausführungsform der Erfindung besteht darin, dass die Haftvermittlerschicht unter Verwendung der Silan-, Strahlen-, Peroxid- oder Azovernetzung vernetzt wird. Die Silanvernetzung stellt eine einfache und kostengünstige Vernetzungsmethode dar, welche insbesondere bei der Anwesenheit von benachbarten Polyamidschichten in der Verbundfolie oder bei einer polyamidbasierenden Haftvermittlerschicht in Frage kommt. Die Strahlenvernetzung kann besonders einfach bei bahnförmigen Produkten angewendet werden. Die Peroxid- und Azovernetzung sind Vernetzungsverfahren, die ohne Wasserzusatz auskommen und benötigen daher keine feuchte Lagerung der Folie.

Bei der Silanvernetzung von Polyethylen finden beispielsweise das Monoplas-, das Sioplas- und das Spherisil-Verfahren Anwendung.

Das zweistufige Sioplas-Verfahren ist beispielsweise durch die Bildung von kovalenten Bindungen durch copolymerisierte oder gepfropfte Silanverbindungen gekennzeichnet. Im ersten Produktionsschritt, der Compoundierung, wird das Silan chemisch durch Pfropfung an die Polymerkette des Polyethylen gebunden. Im zweiten Schritt wird das gepfropfte Polymer zusammen mit einem Masterbatch, welches den Vernetzungskatalysator enthält, extrudiert. Die Ausvernetzung findet bei erhöhter Temperatur in Gegenwart von Feuchtigkeit, insbesondere von Wasser, statt. Vorteilhafterweise kann das Silan-Verfahren auf kommerziell verfügbaren Extrusionsanlagen durchgeführt werden, wobei hohe Extrusionsgeschwindigkeiten kombiniert mit einem minimalen Ausschuss beim Anfahren und somit eine hohe Wirtschaftlichkeit und eine hohe Qualität der Produkte erzielt werden.

Bei dem einstufigen Spherisil-Verfahren werden die Mischprozesse direkt an der Anlage vorgenommen und sind dem Extruder vorgeschaltet. Dabei wird das Polyethylen, vorzugsweise PE-HD, mit anderen Komponenten wie Spherilen, einem Katalysator sowie einem Masterbatch gemischt, getrocknet und über eine Dosierstation gemeinsam mit dem flüssigen Silan dem Extruder zugeführt.

Die Silanvernetzung von Polyamid findet mit Hilfe von Oxysilanen statt. Der Vorteil der Verwendung von Polyamid bei der Silanvernetzung liegt darin, dass der im Polyamid enthaltene Wassergehalt das Reservoir für die Vorstufe der Vernetzungsreaktion mit Oxysilanen darstellt. Dadurch ist bei der Vernetzungsreaktion von Polyamid keine zusätzliche Feuchtigkeit, wie beispielsweise bei der Vernetzung von Polyethylen, erforderlich, so dass die Vernetzungsreaktion von Polyamid einfacher durchzuführen ist.

Dadurch, dass gemäß einer weiteren vorteilhaften Ausgestaltung des Verfahrens die Haftvermittlerschicht zusammen mit der Barriereschicht und/oder der Siegelschicht gemeinsam coextrudiert wird, verringert sich bei der Herstellung der erfindungsgemäßen Verbundfolie die Anzahl der Herstellungsschritte, was wiederum zu einer vorteilhaften Zeitersparnis und Kostenersparnis bei der Herstellung der erfindungsgemäßen Verbundfolie führt. Bei der Verwendung von Polyamid als Haftvermittler wird die Coextrusion der Haftvermittlerschicht zusammen mit der Barriereschicht erleichtert, da bei der Vernetzungsreaktion nicht zusätzlich Feuchtigkeit in Form von beispielsweise Wasser zugeführt werden muss.

Gemäß einer dritten Lehre der vorliegenden Erfindung wird die oben aufgezeigte Aufgabe durch eine Verwendung der erfindungsgemäßen Verbundfolie für Verpackungsmaterial, insbesondere für Lebensmittel, technische und/oder pharmazeutische Produkte oder als technischer Verbund gelöst. Die erfindungsgemäße Verbundfolie kann nicht nur von ihren Barriereeigenschaften her, sondern auch von ihren Verarbeitungsparametern bei deren Verwendung beispielsweise als Verpackungsmaterial an die jeweilige Anwendung optimiert werden. Darüber hinaus sind die Verbundfolien trotz leichter Herstellbarkeit für sterilisierbare oder pasteurisierbare Verpackungen verwendbar. Technische Verbunde, wie beispielsweise Kabelabschirmungen, profitieren ebenfalls von den nachträglichen Anpassungsmöglichkeit der Verbundfolie an Verarbeitungsbedingungen.

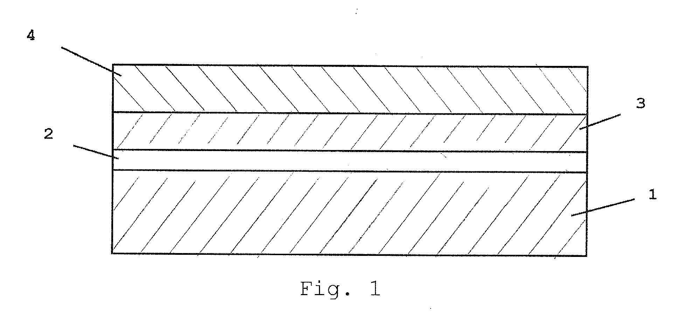

Es gibt nun eine Vielzahl von Möglichkeiten, die erfindungsgemäße Verbundfolie und das erfindungsgemäße Verfahren zur Herstellung einer Verbundfolie für Lebensmittelverpackungen auszugestalten und weiterzubilden. Hierzu wird beispielsweise verwiesen einerseits auf die den Patentansprüchen 1 und 4 nachgeordneten Patentansprüchen und andererseits auf die Beschreibung eines Ausführungsbeispiels in Verbindung mit der Zeichnung.

In der Zeichnung zeigt die einzige Figur ein Ausführungsbeispiel einer erfindungsgemäßen Verbundfolie für Lebensmittelverpackungen.

In der einzigen Figur ist ein Ausführungsbeispiel für eine Verbundfolie für Lebensmittelverpackungen mit einer Substratschicht 1, einer Haftvermittlerschicht 2, einer Barriereschicht 3 und einer Siegelschicht 4 dargestellt, wobei die Haftvermittlerschicht 2 nach der Herstellung der Verbundfolie teilweise vernetzt wurde. Bei der Herstellung der erfindungsgemäßen Verbundfolie wird die Barriereschicht 3, welche beispielsweise aus Polyamid, Polyester oder Polypropylen bestehen kann, zusammen mit der Haftvermittlerschicht 2, welche aus einer nichtpolypropylenbasierenden, insbesondere polyethylen- oder polyamidbasierenden Schicht besteht, zusammen mit der Siegelschicht 4 coextrudiert. Der coextrudierte Verbund aus Siegel-, Barriere- und Haftvermittlerschicht wird auf eine Substratschicht 1 aufgebracht. Dies kann durch direktes Coextrudieren auf die Substratschicht 1 oder beispielsweise durch Extrusionskaschierung erfolgen, so dass eine erfindungsgemäße Verbundfolie entsteht. Die Substratschicht kann dabei, wie bereits beschrieben, aus einer Papier-, Karton-, Aluminium oder einer beliebigen anderen Substratschicht bestehen. Vor dem Heißsiegeln der Verbundfolie, beispielsweise zum Versiegeln eines Füllgutbehälters, wird die Viskosität der Haftvermittlerschicht 2 beispielsweise durch Vernetzung, vorzugsweise mit Hilfe der bereits oben beschriebenen Silanvernetzung, erhöht. Anstatt der Silanvernetzung können jedoch auch die Peroxid-, Azo- oder die Strahlenvernetzung eingesetzt werden. Bei der Peroxid- oder bei der Azovernetzung wird zu dem Polymer ein Peroxid respektive eine Azo-Verbindung als Vernetzungsmittel zugegeben, wobei die eigentliche Vernetzung durch Zufuhr von Wärme erfolgt. Die Strahlenvernetzung dagegen erfolgt mit Hilfe von elektromagnetischer Strahlung, wie UV- oder γ-Strahlung oder auch mit Elektronenstrahlen. Anschließend wird die fertige Verbundfolie heißgesiegelt, wobei durch den erhöhten Vernetzungsgrad der Haftvermittlerschicht 2 gleichzeitig die Erweichungs- bzw. Schmelztemperatur der Haftvermittlerschicht 2 erhöht wurde, so dass ein Erweichen dieser Schicht 2 durch die beim Heißsiegeln der Verbundfolie zugeführte Wärme verhindert wird und es somit nicht mehr zu einem Herausquetschen der Haftvermittlerschicht 2 aus der Siegelnaht beim Aufbringen des Siegeldruckes kommt.

Im dargestellten Ausführungsbeispiel ist eine Haftvermittlerschicht 2 zwischen der Substratschicht 1 und der Barriereschicht 3 angeordnet. Vorstellbar ist aber auch, dass die Substratschicht 1 ebenfalls eine Haftvermittlerschicht aufweist, so dass nach dem Aufbringen der coextrudierten Folien 2, 3 und 4 auf die Substratschicht 1 durch direktes Extrudieren auf die Oberfläche der Substratschicht 1 oder durch Extrusionskaschieren zwei Haftvermittlerschichten zwischen Substratschicht 1 und Barriereschicht 3 vorgesehen ist. Auf diese Weise kann die Verbindung zwischen der Substratschicht 1 und den coextrudierten Folien 2,3 und 4 verbessert werden.

Die erfindungsgemäße Verbundfolie bzw. das erfindungsgemäße Verfahren zeichnen sich durch besonders gut einstellbare Siegeleigenschaften für coextrudierte Siegelschichten aus.

## Patentansprüche

1. Verbundfolie mit einer Substratschicht (1), einer Haftvermittlerschicht (2) und einer Siegelschicht (4),
**dadurch gekennzeichnet, dass** mindestens eine der genannten Schichten der Verbundfolie, insbesondere die Haftvermittlerschicht (2), ein sich während der Herstellung veränderndes und/oder nach der Herstellung der Verbundfolie veränderbares Erweichungs-, Fließ- und/oder Erstarrungsverhalten aufweist.

2. Verbundfolie nach Anspruch 1,
**dadurch gekennzeichnet, dass** eine Barriereschicht (3) vorgesehen ist.

3. Verbundfolie nach Anspruch 1 oder 2,
**dadurch gekennzeichnet, dass** der Vernetzungsgrad der Haftvermittlerschicht (2) während und/oder nach der Herstellung der Verbundfolie einstellbar ist.

4. Verbundfolie nach einem der Ansprüche 1 bis 3,
**dadurch gekennzeichnet, dass** eine einen während und/oder nach der Herstellung der Verbundfolie einstellbaren Vernetzungsgrad aufweisende, nicht-polypropylenbasierende Haftvermittlerschicht (2) vorgesehen ist.

5. Verbundfolie nach einem der Ansprüche 1 bis 4,
**dadurch gekennzeichnet, dass** eine einen während und/oder nach der Herstellung der Verbundfolie einstellbaren Vernetzungsgrad aufweisende, polyethylen- oder polyamidbasierende Haftvermittlerschicht (2) vorgesehen ist.

6. Verbundfolie nach einem der Ansprüche 1 bis 5,
**dadurch gekennzeichnet, dass** die Haftvermittlerschicht (2) mit der Barriereschicht (3) und/oder der Siegelschicht (4) gemeinsam coextrudiert ist.

7. Verfahren zur Herstellung einer Verbundfolie mit einer Substratschicht, einer Haftvermittlerschicht und einer Siegelschicht, insbesondere nach einem der Ansprüche 1 bis 6,
**dadurch gekennzeichnet, dass** während und/oder nach der Herstellung der Verbundfolie das Erweichungs-, Fließ- und/oder Erstarrungsverhalten mindestens einer der Schichten, insbesondere der Haftvermittlerschicht, eingestellt wird.

8. Verfahren nach Anspruch 7,
**dadurch gekennzeichnet, dass** das Erweichungs-, Fließ- und/oder Erstarrungsverhalten mindestens einer der Schichten während und/oder nach der Herstellung der Verbundfolie durch Änderung des Vernetzungsgrades eingestellt wird.

9. Verfahren nach Anspruch 7 oder 8,
**dadurch gekennzeichnet, dass** als Haftvermittlerschicht eine einen während und/oder nach der Herstellung der Verbundfolie einstellbaren Vernetzungsgrad aufweisende, nicht-polypropylenbasierende Schicht verwendet wird.

10. Verfahren nach einem der Ansprüche 7 bis 9,
**dadurch gekennzeichnet, dass** als Haftvermittlerschicht eine einen während und/oder nach der Herstellung der Verbundfolie einstellbaren Vernetzungsgrad aufweisende, polyethylen- oder polyamidbasierende Schicht verwendet wird.

11. Verfahren nach einem der Ansprüche 7 bis 10,
**dadurch gekennzeichnet, dass** die Haftvermittlerschicht unter Verwendung der Silan-, Peroxid-, Azo- oder Strahlenvernetzung vernetzt wird.

12. Verfahren nach einem der Ansprüche 7 bis 11,
**dadurch gekennzeichnet, dass** die Haftvermittlerschicht mit der Barriereschicht und/oder der Siegelschicht gemeinsam coextrudiert wird.

13. Verwendung einer Verbundfolie nach einem der Ansprüche 1 bis 6, insbesondere hergestellt unter Verwendung eines Verfahrens nach einem der Ansprüche 7 bis 12, als Verpackungsmaterial, insbesondere für Lebensmittel, technische Produkte und/oder pharmazeutische Produkte oder als technischer Verbund.
